# EUROPEAN PATENT APPLICATION

(11) **EP 4 183 474 A1**
(43) Date of publication of application: **24.05.2023**
(21) Application number: 21846370.1
(22) Date of filing: 06.07.2021
(51) Int. Cl.: B01D 53/92, B01J 23/63, B01J 35/02, F01N 3/20, F01N 3/28

(54) **EXHAUST GAS PURIFICATION CATALYST SYSTEM**

(30) Priority: 20.07.2020 JP 2020123786
(71) Applicant: CATALER CORPORATION, Kakegawa-shi, Shizuoka 437-1492 (JP)
(72) Inventor: TAKASAKI, Kohei, Kakegawa-shi, Shizuoka 437-1492 (JP); OHASHI, Tatsuya, Kakegawa-shi, Shizuoka 437-1492 (JP); OISHI, Shunsuke, Kakegawa-shi, Shizuoka 437-1492 (JP); ONOE, Ryota, Kakegawa-shi, Shizuoka 437-1492 (JP); HORI, Junichi, Kakegawa-shi, Shizuoka 437-1492 (JP); TAKASU, Ryosuke, Kakegawa-shi, Shizuoka 437-1492 (JP); KASUYA, Chihiro, Kakegawa-shi, Shizuoka 437-1492 (JP)
(74) Representative: Ricker, Mathias
(86) International application number: PCT/JP2021/025504
(87) International publication number: WO 2022/019108

(57) **Abstract**

Provided is an exhaust gas purification catalyst system comprising, in the following order, from the upstream side of an exhaust gas flow: a first exhaust gas purification catalyst apparatus 100 including a metal honeycomb substrate 110 and a first catalyst coat layer 120 on the metal honeycomb substrate 110; a heater 300; and a second exhaust purification catalyst apparatus 200 including a cordierite honeycomb substrate 210 and a second catalyst coat layer 220 on the cordierite honeycomb substrate 210, wherein the first catalyst coat layer 120 contains an adsorbent 130 that can adsorb one or two or more among NOx, HC and CO, and the second catalyst coat layer 220 contains inorganic oxide particles 230 and catalyst precious metal particles 240 supported on the inorganic oxide particles 230.

## Description

### FIELD

The present invention relates to an exhaust gas purification catalytic system.

### BACKGROUND

In recent years, electrically heated catalyst (EHC) devices have attracted attention as exhaust gas purification devices for purifying exhaust gas from automotive engines. By using an EHC, for example, even under conditions where the temperature of a catalyst bed is low and the catalyst is not easily activated, such as immediately after engine start, the catalyst is forcibly activated via electric heating, and exhaust gas purification can be enhanced.

In a catalytic device comprising an EHC, heat generated by electric conduction in the EHC is transferred downstream by an exhaust gas flow, thereby warming the catalyst on the exhaust gas flow downstream side. Therefore, an EHC is positioned on the upstream side of an exhaust gas flow in a conventional catalytic device.

For example, PTL 1 discloses a metal support for electrically heated catalytic device comprising a honeycomb material obtained by laminating corrugated and flat sheets made of metal via an insulating sheet and winding into a comma shape; and an electrode portion comprising a two-part outer cylindrical portion arranged on the outer periphery of the honeycomb material, and describes that the metal support for electrically heated catalytic device is used in series with a metal support or a ceramic support provided downstream thereof.

PTL 2 discloses an electrically heated catalytic device for exhaust gas purification, comprising an electrically heated pre-catalyst carrier and a main catalyst carrier on an exhaust gas downstream side of the pre-catalyst carrier.

### [CITATION LIST]

### [PATENT LITERATURE]

[PTL 1] Japanese Unexamined Patent Publication (Kokai) No. 11-253814
[PTL 2] Japanese Unexamined Patent Publication (Kokai) No. 11-179157

### SUMMARY

### [TECHNICAL PROBLEM]

In a catalytic device comprising an EHC, when the EHC is arranged most upstream in an exhaust gas flow, heat generated by electric conduction can be used effectively in a catalytic device on the downstream side from the EHC. However, for example, for a short period of time such as immediately after engine start, warmed area of the catalytic device on the downstream side is small, resulting in insufficient warming, whereby highly efficient exhaust gas purification expected from the EHC could not be enjoyed in many cases.

An object of the present invention is to provide an exhaust gas purification system having a high exhaust gas purification efficiency even before a catalytic device is sufficiently warmed by an EHC, for example, immediately after engine start.

### [SOLUTION TO PROBLEM]

The present invention is as follows.

«Aspect 1» An exhaust gas purification catalytic system, comprising,
in this order from an upstream side of an exhaust gas flow,
   a first exhaust gas purification catalytic device comprising a metal honeycomb substrate and a first catalytic coating on the metal honeycomb substrate,
   a heater, and
   a second exhaust gas purification catalytic device comprising a cordierite honeycomb substrate and a second catalytic coating layer on the cordierite honeycomb substrate, wherein
the first catalytic coating layer comprises an adsorbent capable of adsorbing one or more of NOx, HC, and CO, and
the second catalytic coating layer comprises inorganic oxide particles and catalytic noble metal particles supported by the inorganic oxide particles.

«Aspect 2» The exhaust gas purification catalytic system according to Aspect 1, wherein the heater is a heat disk.

«Aspect 3» The exhaust gas purification catalytic system according to Aspect 1 or 2, wherein the heater is fixed to an exhaust gas flow downstream end of the metal honeycomb substrate.

«Aspect 4» The exhaust gas purification catalytic system according to Aspect 1 or 2, wherein the heater is formed integrally with an exhaust gas flow downstream side of the metal honeycomb substrate.

«Aspect 5» The exhaust gas purification catalytic system according to any one of Aspects 1 to 4, wherein the adsorbent comprises inorganic oxide particles.

«Aspect 6» The exhaust gas purification catalytic system according to Aspect 5, wherein the adsorbent comprises zeolite particles.

«Aspect 7» The exhaust gas purification catalytic system according to Aspect 6, wherein the zeolite particles include one or more selected from BEA zeolite, AEI zeolite, MFI zeolite, EMT zeolite, ERI zeolite, MOR zeolite, FER zeolite, FAU zeolite, CHA zeolite, LEV zeolite, MWW zeolite, CON zeolite, and EUO zeolite.

«Aspect 8» The exhaust gas purification catalytic system according to any one of Aspects 1 to 7, wherein
the first catalytic coating layer is
a catalytic coating layer having a two-layer configuration in which a lower layer and an upper layer are laminated in this order on the substrate, wherein
the lower layer comprises an adsorbent, inorganic oxide particles other than the adsorbent, and catalytic noble metal particles, and the catalytic noble metal particles are supported by at least one of the adsorbent and the inorganic oxide particles other than the adsorbent, and
the upper layer comprises inorganic oxide particles other than the adsorbent and catalytic noble metal particles, and the catalytic noble metal particles are supported by the inorganic oxide particles other than the adsorbent.

«Aspect 9» The exhaust gas purification catalytic system according to any one of Aspects 1 to 8, wherein in the second catalytic coating layer, a mass of the catalytic noble metal particles in an upstream half of an exhaust gas flow is greater than a mass of the catalytic noble metal particles in a downstream half of the exhaust gas flow.

«Aspect 10» The exhaust gas purification catalytic system according to Aspect 9, wherein in the second catalytic coating layer, a mass of the catalytic noble metal particles in the upstream half of an exhaust gas flow is more than 50% by mass and 90% by mass or less, based on a total mass of the catalytic noble metal particles in the second catalytic coating layer.

«Aspect 11» The exhaust gas purification catalytic system according to any one of Aspects 1 to 10, wherein
the second catalytic coating layer is
a catalytic coating layer having a two-layer configuration in which a lower layer and an upper layer are laminated in this order on the substrate, wherein
the lower layer comprises inorganic oxide particles and catalytic noble metal particles, and the catalytic noble metal particles are supported by the inorganic oxide particles, and
the upper layer comprises inorganic oxide particles and catalytic noble metal particles, and the catalytic noble metal particles are supported by the inorganic oxide particles.

### [ADVANTAGEOUS EFFECTS OF INVENTION]

According to the present invention, an exhaust gas purification system having a high exhaust gas purification efficiency even before a catalytic device is sufficiently warmed by EHC is provided.

### BRIEF DESCRIPTION OF DRAWINGS

FIG. 1 is a schematic view showing an example of a basic configuration of the exhaust gas purification catalytic system of the present invention.
FIG. 2 is a schematic view showing another example of a basic configuration of the exhaust gas purification catalytic system of the present invention.
FIG. 3 is a schematic cross-sectional view showing an example of the shape of a heater in the exhaust gas purification catalytic system of the present invention.
FIG. 4 is a schematic cross-sectional view showing another example of the shape of a heater in the exhaust gas purification catalytic system of the present invention.
FIG. 5 is a schematic view showing configurations of the exhaust gas purification catalytic system produced in the Examples and Comparative Examples.
FIG. 6 is a graph showing changes over time of coating layer bed temperature measured in the Reference Examples.

### DESCRIPTION OF EMBODIMENTS

The exhaust gas purification catalytic system of the present invention is
an exhaust gas purification catalytic system, comprising,
in this order from an upstream side of an exhaust gas flow,
   a first exhaust gas purification catalytic device comprising a metal honeycomb substrate and a first catalytic coating layer on the metal honeycomb substrate,
   a heater, and
   a second exhaust gas purification catalytic device comprising a cordierite honeycomb substrate and a second catalytic coating layer on the cordierite honeycomb substrate, wherein
the first catalytic coating layer comprises an adsorbent capable of adsorbing one or more of NOx, HC, and CO, and
the second catalytic coating layer comprises inorganic oxide particles and catalytic noble metal particles supported by the inorganic oxide particles.

The present invention focuses on the heat capacities of the metal honeycomb substrate and the cordierite honeycomb substrate.

For example, the heat capacity of a metal honeycomb substrate made of 20Cr5Al-based stainless steel is compared to the heat capacity of a cordierite honeycomb substrate composed of 2MgO·2Al₂O₃·5SiO₂. For the specific heat capacities of the materials themselves, cordierite is larger than stainless steel. However, the cordierite honeycomb substrate has a very small mass per L of substrate compared to the metal honeycomb substrate. Therefore, when the heat capacities per L of substrates are compared, the cordierite honeycomb substrate is smaller than the metal honeycomb substrate made of stainless steel.

The above comparison is shown in Table 1.

### [Table 1]

**Table 1.**

| | Metal substrate | Cordierite substrate |
|---|---|---|
| Material | 20Cr5Al-based | 2MgO·2Al₂O₃·5SiO₂ |
| Heat capacity per g of material (J/g·K) | 0.48 | 0.73 |
| Mass per L of substrate (g/L) | 1,040 | 270 |
| Heat capacity per L of substrate (J/g·K·L) | 499 | 197 |

In the present invention,
a first exhaust gas purification catalytic device comprising a metal honeycomb substrate and a first catalytic coating layer on the metal honeycomb substrate,
a heater (EHC), and
a second exhaust gas purification catalytic device comprising a cordierite honeycomb substrate and a second catalytic coating layer on the cordierite honeycomb substrate are arranged in this order.

The first catalytic coating layer of the first exhaust gas purification catalytic device comprises an adsorbent capable of adsorbing one or more of NOx, HC, and CO, and
the second catalytic coating layer of the second exhaust gas purification catalytic device comprises inorganic oxide particles and catalytic noble metal particles supported by these inorganic oxide particles.

The second exhaust gas purification catalytic device comprising a cordierite honeycomb substrate having a small heat capacity is arranged directly downstream of the exhaust gas flow from a heater, whereby the second exhaust gas purification catalytic device can be warmed rapidly by heat generated from electric conduction in the heater. Consequently, the catalytic noble metal particles in the catalytic coating layer are activated early, and the desired exhaust gas purification ability can be exhibited in an extremely short time after engine start.

The first exhaust gas purification catalytic device comprising a metal honeycomb substrate having a large heat capacity is arranged on the exhaust gas flow upstream side of the heater. Since the first catalytic coating layer of the first exhaust gas purification catalytic device comprises an adsorbent, one or more of NOx, HC, and CO can be efficiently adsorbed in a cold state before warming.

By arranging the first exhaust gas purification catalytic device on the exhaust gas flow upstream side of the heater, the first exhaust gas purification catalytic device is barely warmed by the heat from electric conduction in the heater and is solely warmed by (only) the heat of the exhaust gas. Moreover, since the heat capacity of the metal honeycomb substrate contained in the first exhaust gas purification catalytic device is large, the warming is carried out extremely slowly. As a result, one or more of NOx, HC, and CO in the exhaust gas, which are adsorbed in a cold state before the warming, are retained in the adsorbent in the first exhaust gas purification catalytic device for a long time. The time until the second exhaust gas purification catalytic device is warmed and the catalytic noble metal particles exhibit desired activity can be utilized.

In the exhaust gas purification catalytic system of the present invention, a high exhaust gas purification efficiency can be obtained even before the system is sufficiently warmed by an EHC due to the mechanism of action described above.

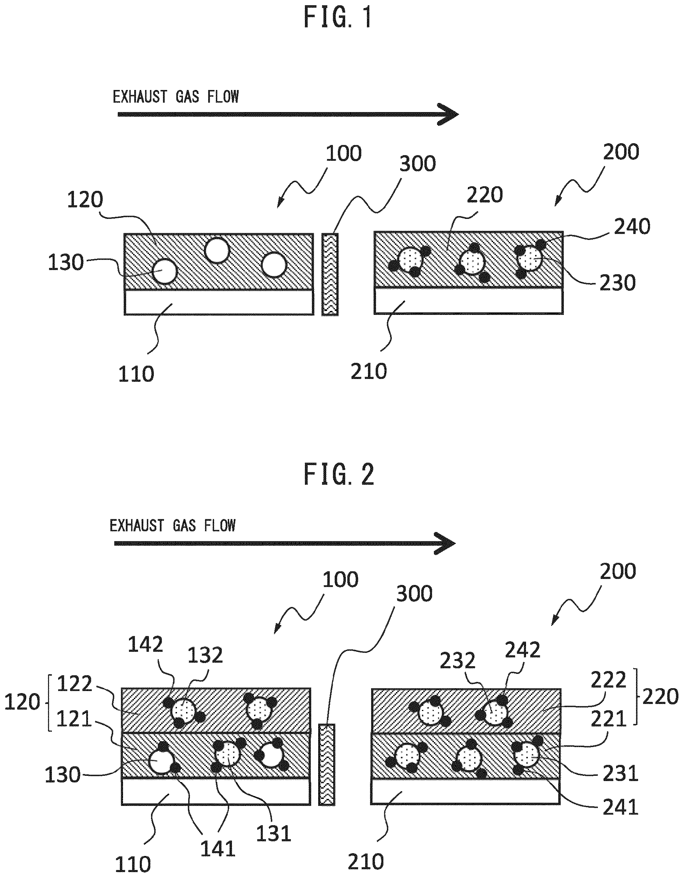

Hereinafter, with reference to the drawings, a basic configuration of the exhaust gas purification catalytic system of the present invention will be described. Basic configurations of the exhaust gas purification catalytic system of the present invention are shown in FIGS. 1 and 2.

The exhaust gas purification catalytic system in FIG. 1 comprises, in this order from the upstream side of an exhaust gas flow, a first exhaust gas purification catalytic device (100), a heater (300), and a second exhaust gas purification catalytic device (200).

The first exhaust gas purification catalytic device (100) comprises a metal honeycomb substrate (110) and a first catalytic coating layer (120) on the metal honeycomb substrate (110). The first catalytic coating layer (120) includes an adsorbent (130) capable of adsorbing one or more of NOx, HC, and CO.

The second exhaust gas purification catalytic device (200) comprises a cordierite honeycomb substrate (210) and a second catalytic coating layer (220) on the cordierite honeycomb substrate (210). The second catalytic coating layer (220) includes inorganic oxide particles (230) and catalytic noble metal particles (340) supported by the inorganic oxide particles (330). The inorganic oxide particles (330) in the second catalytic coating layer (320) may be inorganic oxide particles other than the adsorbent.

The exhaust gas purification catalytic system in FIG. 2 is the same as that in FIG. 1, in that:
from the upstream side of an exhaust gas flow, a first exhaust gas purification catalytic device (100), a heater (300), and a second exhaust gas purification catalytic device (200) are contained in this order;
the first exhaust gas purification catalytic device (100) comprises a metal honeycomb substrate (110) and a first catalytic coating layer (120) on the metal honeycomb substrate (110);
the first catalytic coating layer (120) includes an adsorbent (130);
the second exhaust gas purification catalytic device (200) comprises a cordierite honeycomb substrate (210) and a second catalytic coating layer (220) on the cordierite honeycomb substrate (210);
the second catalytic coating layer (220) includes inorganic oxide particles and catalytic noble metal particles supported by the inorganic oxide particles; and
the inorganic oxide particles in the second catalytic coating layer (220) may be inorganic oxide particles other than the adsorbent.

However, in the exhaust gas purification catalytic system in FIG. 2, the first catalytic coating layer (120) of the first exhaust gas purification catalytic device (100) is a catalytic coating layer having a two-layer configuration in which a lower layer (121) and an upper layer (122) are laminated.

The lower layer (121) of the first catalytic coating layer (120) in the exhaust gas purification catalytic system in FIG. 2 may comprise an adsorbent (130), inorganic oxide particles (131) other than the adsorbent, and catalytic noble metal particles (141). The catalytic noble metal particles (141) may be supported by at least one of the adsorbent and the inorganic oxide particles (131) other than the adsorbent (130).

The upper layer (122) of the first catalytic coating layer (120) comprises inorganic oxide particles (132) other than the adsorbent and catalytic noble metal particles (142). The catalytic noble metal particles (142) may be supported by the inorganic oxide particles (132) other than the adsorbent.

In the exhaust gas purification catalytic system in FIG. 2, the second catalytic coating layer (220) of the second exhaust gas purification catalytic device (200) is a catalytic coating layer having two-layer configuration in which a lower layer (221) and an upper layer (222) are laminated.

The lower layer (221) of the second catalytic coating layer (220) in the exhaust gas purification catalytic system in FIG. 2 comprises inorganic oxide particles (231) and catalytic noble metal particles (241). The catalytic noble metal particles (241) may be supported by the inorganic oxide particles (231).

The upper layer (222) of the second catalytic coating layer (220) comprises inorganic oxide particles (232) and catalytic noble metal particles (242). The catalytic noble metal particles (242) may be supported by the inorganic oxide particles (232).

### <<First exhaust gas purification catalytic device>>

The first exhaust gas purification catalytic device comprises a metal honeycomb substrate and a first catalytic coating layer on the metal honeycomb substrate.

### <Metal honeycomb substrate>

The metal honeycomb substrate may be, for example, a honeycomb structure obtained by laminating metal flat and corrugated sheets and winding into a roll. In this case, the non-contacting portions of the flat sheet and the corrugated sheet may be configured with cells that run along the length direction of the honeycomb.

The metal honeycomb substrate may comprise an outer cylinder around the honeycomb structure roll. This outer cylinder may be, for example, made of metal.

The metal flat and corrugated sheets constituting the metal honeycomb substrate, as well as the outer cylinder, may each have perforations. However, in the present invention, from the viewpoint of maintaining a large heat capacity for the first exhaust gas purification catalytic device, one or more of the flat sheet, the corrugated sheet, and if present, the outer cylinder may have no perforations, or two or more thereof may have no perforations. Particularly, the flat sheet and the corrugated sheet may have no perforations. Further, if present, the outer cylinder may have no perforations.

The size and shape of the metal honeycomb substrate may be appropriately selected so as to match the size and shape of the exhaust system of an engine to which the exhaust gas purification catalytic system of the present invention is applied, for example, as a cylinder having a diameter of 60 mm or more and 165 mm or less and a length of 30 mm or more and 160 mm or less, or as a polygonal column having the same size. The cylinder or polygonal column may be bent halfway along the length direction.

The material of the metal honeycomb substrate may be a metal material, and may be, for example, a metal selected from Fe, Co, Ni, Al, Mg, Ti, Mo, W, Cr, Nb, and Ta, or an alloy comprising two or more thereof. Specifically, examples thereof can include stainless steel. Particularly, a known stainless steel may be used.

The metal honeycomb substrate may be covered on the surface with an oxide coating. The oxide coating may be, for example, a thin film of Al₂O₃.

### <First catalytic coating layer>

The first catalytic coating layer of the first exhaust gas purification catalytic device comprises an adsorbent capable of adsorbing one or more of NOx, HC, and CO.

The adsorbent in the first catalytic coating layer may include, for example, inorganic oxide particles.

The inorganic oxide particles of the adsorbent may be, for example, particles of a zeolite, an alumina, an alkali metal oxide, an alkaline earth metal oxide, or a rare earth oxide. The alumina as the adsorbent may be one which has a large specific surface area among aluminas. Zeolites and aluminas preferably have porous structures from the viewpoint of having a large specific surface area.

The zeolite may be, for example, BEA, AEI, MFI, EMT, ERI, MOR, FER, FAU, CHA, LEV, MWW, CON, or EUO zeolite.

The alkali metal oxide may be, for example, an oxide comprising a metal such as sodium (Na), potassium (K), rubidium (Rb), or cesium (Cs). A potassium oxide is particularly preferable.

The alkaline earth metal oxide may be, for example, an oxide of a metal selected from calcium (Ca), strontium (Sr), and barium (Ba). A barium oxide is particularly preferable.

The rare earth oxide may be an oxide of a metal selected from cerium (Ce) and praseodymium (Pr). Oxides of Ce (ceria) are generally known in the art as a material having OSC (oxygen storage capacity) ability. However, ceria exhibits OSC ability in a warmed state, but does not exhibit OSC ability and functions as an adsorbent in a cold state. Therefore, ceria may be contained in the adsorbent in the first catalytic coating layer.

Particles of an inorganic oxide having basic points can be used in the adsorption of NOx and CO. Therefore, for example, an adsorbent comprising particles of an alkali metal oxide, an alkaline earth metal oxide, a rare earth oxide, or a zeolite has a function of effectively adsorbing and desorbing NOx and CO.

Particles of an inorganic oxide having acidic points can be used in the adsorption of HC. Therefore, for example, an adsorbent comprising particles of a zeolite or an alumina has a function of effectively adsorbing and desorbing HC.

The first catalytic coating layer may comprise an optional component, as needed, in addition to the adsorbent. The optional component may be, for example, inorganic oxide particles other than the adsorbent, catalytic noble metal particles, or a binder.

The inorganic oxide particles other than the adsorbent may be, for example, particles comprising one or more selected from alumina, silica, titania, ceria, zirconia, and rare earth metal oxides other than ceria. The alumina as the inorganic oxide particles other than the adsorbent may be one having a small specific surface area among aluminas. The rare earth metal oxide other than ceria may be an oxide of a metal such as yttrium, lanthanum, praseodymium, or neodymium.

The catalytic noble metal particles may be, for example, of a platinum group metal. Specifically, the catalytic noble metal particles may be, for example, particles of one or more selected from palladium (Pd), platinum (Pt), and rhodium (Rh). The catalytic noble metal particles may be supported by the above inorganic oxide particles of the adsorbent, the inorganic oxide particles other than the adsorbent, or both.

The binder may be, for example, a sol of an appropriate inorganic oxide such as alumina, titania, or zirconia.

The first catalytic coating layer may be of a single layer or a multilayer having two or more layers, and may be a coating layer in a zonal configuration having a front-stage coating layer and a back-stage coating layer.

The first catalytic coating layer may be, for example,
a catalytic coating layer having a two-layer configuration in which a lower layer and an upper layer are laminated in this order on a substrate, wherein
the lower layer comprises an adsorbent, inorganic oxide particles other than the adsorbent, and catalytic noble metal particles, and the catalytic noble metal particles are supported by at least one of the adsorbent and the inorganic oxide particles other than the adsorbent, and
the upper layer comprises inorganic oxide particles other than the adsorbent and catalytic noble metal particles, and the catalytic noble metal particles are supported by the inorganic oxide particles other than the adsorbent.

In this case, the inorganic oxide particles contained in the lower layer of the first catalytic coating layer and the inorganic oxide particles contained in the upper layer may be of the same type, or may be of different types.

The catalytic noble metal particles contained in the lower layer of the first catalytic coating layer and the catalytic noble metal particles contained in the upper layer may be of the same type, or may be of different types. For example, the catalytic noble metal particles contained in the lower layer of the first catalytic coating layer may be particles of one or two noble metals selected from Pd and Pt, and the catalytic noble metal particles contained in the upper layer may be particles of Rh.

Alternatively, the first catalytic coating layer may be, for example,
a catalytic coating layer in a zonal configuration in which an exhaust gas flow upstream side catalyst layer and a downstream side catalyst layer are arranged on the substrate, wherein
the downstream side catalyst layer comprises an adsorbent, inorganic oxide particles other than the adsorbent, and catalytic noble metal particles, and the catalytic noble metal particles are supported by at least one of the adsorbent and the inorganic oxide particles other than the adsorbent, and
the upstream side catalyst layer comprises inorganic oxide particles other than the adsorbent and catalytic noble metal particles, and the catalytic noble metal particles are supported by the inorganic oxide particles other than the adsorbent.

In this case, the inorganic oxide particles other than the adsorbent contained in the downstream side catalyst layer of the first catalytic coating layer and the inorganic oxide particles other than the adsorbent contained in the upstream side catalyst layer may be of the same type, or may be of different types.

The catalytic noble metal particles contained in the downstream side catalyst layer of the first catalytic coating layer and the catalytic noble metal particles contained in the upstream side catalyst layer may be of the same type, or may be of different types. For example, the catalytic noble metal particles contained in the downstream side catalyst layer of the first catalytic coating layer may be particles of one or two metals selected from Pd and Pt, and the catalytic noble metal particles contained in the upstream side catalyst layer may be particles of Rh.

### <<Heater>>

In the exhaust gas purification catalytic system of the present invention, a heater is arranged between the exhaust gas flow downstream side of the first exhaust gas purification catalytic device and the exhaust gas flow upstream side of the second exhaust gas purification catalytic device.

The heater generates heat, for example, by electric conduction, and has functions of heating gas discharged from the first exhaust gas purification catalytic device and then supplying the gas to the second exhaust gas purification catalytic device. In addition, the heater may have a function of heating the second exhaust gas purification catalytic device itself by heat generated from the heater.

The shape of the heater is not limited as long as the above functions are included. For example, the heater may be cylindrical, or may be a heat-generating body of any shape, such as a honeycomb shape, a spiral shape, a double spiral shape, or a zigzag shape, arranged inside a cylindrical housing. The term "double spiral shape" described herein refers to a shape in which a spiral extending from the outer edge toward the center of a circle defining an outer periphery of the cylindrical housing and a spiral extending from the center toward the outer edge are connected at the center of the circle to form a single curved line as a whole. The term "zigzag shape" refers to a shape in which a straight line is bent many times in a "Z" shape.

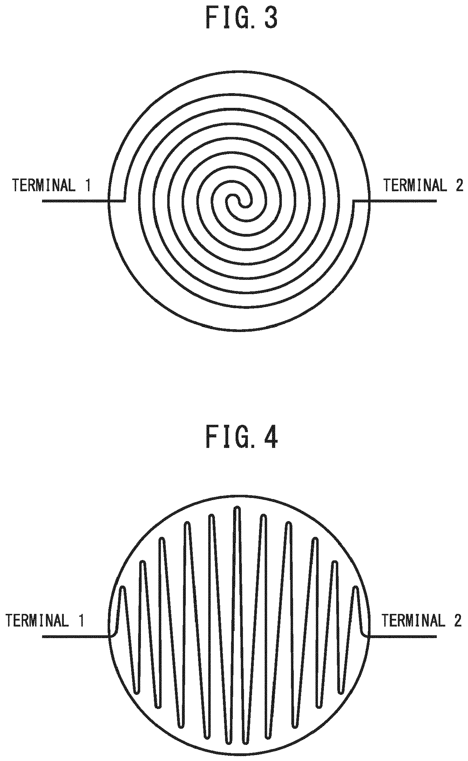

FIGS. 3 and 4 are schematic cross-sectional views each showing an example of a shape of the heater. FIG. 3 is an example of a cross-sectional shape of the heater in which a double spiral heat-generating body is arranged inside a cylindrical housing. FIG. 4 is an example of a cross-sectional shape of the heater in which a zigzag heat-generating body is arranged inside a cylindrical housing. In each of the heaters in FIGS. 3 and 4, the heat-generating body generates heat by electric conduction through terminals 1 and 2 to heat gas passing through the heater.

A heater in which a heat-generating body is arranged inside a cylinder of a cylindrical housing has an advantage of heating passing gas at high efficiency.

The heater in the exhaust gas purification catalytic system of the present invention may be a heat disk. A "heat disk" is also referred to by terms such as "heating disk" and "heating device" in the art. A catalytic device provided with this heat disk is sometimes called an "EHC (electrically heated catalyst) system".

As described herein, a "heat disk" refers to a heater which has a heat-generating body arranged inside a cylinder of a cylindrical housing and has a length shorter than the diameter thereof.

The material of the heat-generating body of the heater is arbitrary as long as heat is generated by electric conduction, and may be a metallic heat-generating body or a non-metallic heat-generating body. The metallic heat-generating body may be, for example, an Fe-Cr-Al alloy, a Ni-Cr alloy, molybdenum, or tungsten. The non-metallic heat-generating body may be, for example, silicon carbide (Si-C), molybdenum silicide, lanthanum chromite, or carbon.

The heater in the exhaust gas purification system of the present invention may be a commercially available product. For example, "EMICAT", an electrically heated catalyst manufactured by Vitesco Technologies Emitec GmbH, can be suitably used.

The heater may have no catalytic coating layer or may have a catalytic coating layer.

When the heater includes a catalytic coating layer, the catalytic coating layer may be formed, for example, on one or both sides of one of the flat and corrugated sheets constituting the heater, or both thereof. When the heater includes the catalytic coating layer, for example, the catalytic coating layer may have a configuration appropriately selected from among those described above as the configuration of the second catalytic coating layer.

The heater may be arranged as a separate member from the metal honeycomb substrate of the first exhaust gas purification catalytic device, may be fixed to the exhaust gas flow downstream end of the metal honeycomb substrate, or may be formed integrally with the exhaust gas flow downstream side of the metal honeycomb substrate.

When the heater is fixed to the exhaust gas flow downstream end of the metal honeycomb substrate in the first exhaust gas purification catalytic device, the heater may be directly fixed to the metal honeycomb substrate without any interposition, or may be fixed indirectly using an appropriate fixation member. In any case, the fixation may be made by a known fixation method such as screw fixation or brazing.

### <<Second exhaust gas purification catalytic device>>

The second exhaust gas purification catalytic device in the exhaust gas purification catalytic system of the present invention comprises a cordierite honeycomb substrate and a second catalytic coating layer on the cordierite honeycomb substrate.

### <Cordierite honeycomb substrate>

As the cordierite honeycomb substrate in the second exhaust gas purification catalytic device of the exhaust gas purification catalytic system of the present invention, for example, any cordierite honeycomb substrate known as a honeycomb substrate for automotive exhaust gas purification catalytic devices may be used.

The size and shape of the cordierite substrate may be appropriately selected so as to match the size and shape of the exhaust system of an engine to which the exhaust gas purification catalytic system of the present invention is applied, for example, as a cylinder having a diameter of 60 mm or more and 165 mm or less and a length of 30 mm or more and 160 mm or less, or as a polygonal column having the same size. The cylinder or polygonal column may be bent halfway along the length direction.

### <Second catalytic coating layer>

The second catalytic coating layer of the second exhaust gas purification catalytic device comprises inorganic oxide particles and catalyst particles supported by the inorganic oxide particles.

The inorganic oxide particles in the second catalytic coating layer may be appropriately selected from among those described above as the inorganic oxide particles other than the adsorbent in the first catalytic coating layer.

The catalytic noble metal particles in the second catalytic coating layer may be appropriately selected from among those described above as the catalytic noble metal particles in the first catalytic coating layer.

The second catalytic coating layer may comprise an optional component, as needed, in addition to the inorganic oxide particles and the catalytic noble metal particles supported by the inorganic oxide particles. The optional component may be, for example, a binder. The binder may be appropriately selected from among those described above as the binder in the first catalytic coating layer.

The second catalytic coating layer is intended to be warmed rapidly by a heater, and thus may comprise no adsorbent capable of adsorbing one or more of NOx, HC, and CO in a warmed state. Note that, ceria functions as an adsorbent in a cold state but exhibits dominant OSC ability in a warmed state, and thus may be contained in the second catalytic coating layer.

The second catalytic coating layer may be configured so as to have a catalytic noble metal-enriched layer having an increased catalytic noble metal concentration on the exhaust gas flow upstream side, whereby the mass of the catalytic noble metal particles in the upstream half of the exhaust gas flow is greater than the mass of the catalytic noble metal particles in the downstream half of the exhaust gas flow.

In the exhaust gas purification catalytic system of the present invention, the second exhaust gas purification catalytic device arranged on the exhaust gas flow downstream side of the heater is warmed by the heat from the heater. At this time, the second exhaust gas purification catalytic device itself is gradually warmed from the exhaust gas flow upstream end. Therefore, by arranging more catalytic noble metal particles on the exhaust gas flow upstream side of the second catalytic coating layer, more catalytic noble metal particles are rapidly activated after a cold start, and exhaust gas purification efficiency can be remarkably increased at the time of the cold start.

From such a viewpoint, the mass of the catalytic noble metal particles in the upstream half of the exhaust gas flow in the second catalytic coating layer may be greater than 50% by mass, 55% by mass or greater, or 60% by mass or greater, and may be 90% by mass or less, 80% by mass or less, 75% by mass or less, 70% by mass or less, or 65% by mass or less, based on the total mass of the catalytic noble metal particles in the second catalytic coating layer.

The second catalytic coating layer of the second exhaust gas purification catalytic device may be of a single layer or a multilayer having two or more layers, and may be a coating layer in a zonal configuration having a front-stage layer and a back-stage layer.

The second catalytic coating layer may be, for example,
a catalytic coating layer having a two-layer configuration in which a lower layer and an upper layer are laminated on a substrate, wherein
the lower layer comprises inorganic oxide particles and catalytic noble metal particles, and the catalytic noble metal particles are supported by the inorganic oxide particles, and
the upper layer comprises inorganic oxide particles and catalytic noble metal particles, and the catalytic noble metal particles are supported by the inorganic oxide particles.

In this case, the inorganic oxide particles contained in the lower layer of the second catalytic coating layer and the inorganic oxide particles contained in the upper layer may be of the same type, or may be of different types. In any case, the inorganic oxide particles in the second catalytic coating layer may be inorganic oxide particles other than the adsorbent.

The catalytic noble metal particles contained in the lower layer of the second catalytic coating layer and the catalytic noble metal particles contained in the upper layer may be of the same type, or may be of different types. For example, the catalytic noble metal particles contained in the lower layer of the second catalytic coating layer may be particles of one or two noble metals selected from Pd and Pt, and the catalytic noble metal particles contained in the upper layer may be particles of Rh.

The lower layer of the second catalytic coating layer may be configured so as to have a catalytic noble metal-enriched layer having an increased catalytic noble metal concentration on the exhaust gas flow upstream side, whereby the mass of the catalytic noble metal particles in the upstream half of the exhaust gas flow of the lower layer is greater than the mass of the catalytic noble metal particles in the downstream half of the exhaust gas flow of the lower layer. In this case, the mass of the catalytic noble metal particles in the upstream half of the exhaust gas flow of the lower layer of the second catalytic coating layer may be greater than 50% by mass, 55% by mass or greater, or 60% by mass or greater, and may be 90% by mass or less, 80% by mass or less, 75% by mass or less, 70% by mass or less, or 65% by mass or less, based on the total mass of the catalytic noble metal particles in the lower layer of the second catalytic coating layer.

In the above aspect, the second catalytic coating layer may be, for example, a catalytic coating layer wherein
at least one of the lower layer and the upper layer is divided into exhaust gas flow upstream side and downstream side catalyst layers, and
the mass of the noble metal particles per substrate unit volume in the exhaust gas flow upstream side catalyst layer is greater than the mass of the noble metal particles per substrate unit volume in the downstream side catalyst layer.

Alternatively, the second catalytic coating layer may be, for example,
a catalytic coating layer in a zonal configuration in which exhaust gas flow upstream side and downstream side catalyst layers are arranged on the substrate, wherein
the downstream side catalyst layer comprises inorganic oxide particles and catalytic noble metal particles, and the catalytic noble metal particles are supported by the inorganic oxide particles, and
the upstream side catalyst layer comprises inorganic oxide particles and catalytic noble metal particles, and the catalytic noble metal particles are supported by the inorganic oxide particles.

In this case, the inorganic oxide particles contained in the downstream side catalyst layer of the second catalytic coating layer and the inorganic oxide particles contained in the upstream side catalyst layer may be of the same type, or may be of different types. In any case, the inorganic oxide particles in the second catalytic coating layer may be inorganic oxide particles other than the adsorbent.

The catalytic noble metal particles contained in the downstream side catalyst layer of the second catalytic coating layer and the catalytic noble metal particles contained in the upstream side catalyst layer may be of the same type, or may be of different types. For example, the catalytic noble metal particles contained in the downstream side catalyst layer of the second catalytic coating layer may be particles of one or two noble metals selected from Pd and Pt, and the catalytic noble metal particles contained in the upstream side catalyst layer may be particles of Rh.

### EXAMPLES

### 1. Preparation of coating liquid for forming coating layer

### 1-1. Preparation of coating liquid for forming Pd catalyst layer

In a solution obtained by dissolving palladium nitrate in ion-exchanged water, alumina particles, cerium-zirconium composite oxide particles, and alumina binder sol were dispersed to prepare a coating liquid for forming a Pd catalyst layer.

### 1-2. Preparation of coating liquid for forming Pd-enriched layer

Except that the amount of palladium nitrate used was increased by 1.5 times, a coating liquid for forming a Pd-enriched layer was prepared in the same manner as the above "1-1. Preparation of coating liquid for forming Pd catalyst layer".

### 1-3. Preparation of coating liquid for forming Pd catalyst/adsorption layer

In a solution obtained by dissolving palladium nitrate in ion-exchanged water, alumina particles, cerium-zirconium composite oxide particles, and alumina binder sol were dispersed. Thereafter, particles of BEA zeolite were further added and dispersed therein to prepare a coating liquid for forming a Pd catalyst/adsorption layer.

### 1-4. Preparation of coating liquid for forming Rh catalyst layer

In a solution obtained by dissolving rhodium nitrate in ion-exchanged water, alumina particles, cerium-zirconium composite oxide particles, and alumina binder sol were dispersed to prepare a coating liquid for forming a Rh catalyst layer.

### 2. Substrate used

A metal honeycomb substrate made of stainless steel (600 cells, diameter of 118.4 mm, length of 50.0 mm, volume of about 0.551 L), a cordierite honeycomb substrate (600 cells, diameter of 118.4 mm, length of 50.0 mm, volume of about 0.551 L), and a heat disk were provided with the respective predetermined coating layers of each of Examples and Comparative Examples and used as the substrate. In Comparative Examples 3 and 4, two metal honeycomb substrates of the same type and a heat disk were provided with the respective predetermined coating layers and used.

As the heat disk, "EMICAT" (diameter of 118.4 mm, length of 10.0 mm, volume of about 0.110 L, made of metal), an electrically heated catalyst manufactured Vitesco Technologies Emitec GmbH, was used.

### 3. Production of exhaust gas purification catalytic device

### 3-1. Production of metal catalytic device with adsorption function

A metal honeycomb substrate was coated with the coating liquid for forming a Pd catalyst/adsorption layer, and then dried and baked to form a Pd catalyst/adsorption layer. The Pd catalyst/adsorption layer was coated with the coating liquid for forming a Rh catalyst layer, and then dried and baked to form a Rh catalyst layer. By the above operations, a metal catalytic device, having on the metal honeycomb substrate a Pd catalyst/adsorption layer and a Rh catalyst layer, in this order, was produced.

### 3-2. Production of metal catalytic device

A metal honeycomb substrate was coated with the coating liquid for forming a Pd catalyst layer, and then dried and baked to form a Pd catalyst layer. The Pd catalyst layer was coated with the coating liquid for forming a Rh catalyst layer, and then dried and baked to form a Rh catalyst layer. By the above operations, a metal catalytic device, having on the metal honeycomb substrate a Pd catalyst layer and a Rh catalyst layer, in this order, was produced.

### 3-3. Production of cordierite catalytic device

A cordierite honeycomb substrate was coated with the coating liquid for forming a Pd catalyst layer, and then dried and baked to form a Pd catalyst layer. The Pd catalyst layer was coated with the coating liquid for forming a Rh catalyst layer, and then dried and baked to form a Rh catalyst layer. By the above operations, a cordierite catalytic device, having on the cordierite honeycomb substrate a Pd catalyst layer and a Rh catalyst layer, in this order, was produced.

### 3-4. Production of cordierite catalytic device with Pd-enriched layer

The cordierite honeycomb substrate was coated with the coating liquid for forming a Pd catalyst layer on a region from the downstream end in the exhaust gas flow direction to 50% of the substrate length, and then dried. The substrate coated with the coating liquid for forming a Pd catalyst layer was then coated with the coating liquid for forming a Pd-enriched layer on a region from the upstream end in the exhaust gas flow direction to 50% of the substrate length, and then dried. Thereafter, the coated substrate was baked to form a Pd catalyst layer with a Pd-enriched layer. The coating liquid for forming a Rh catalyst layer was then coated on the Pd catalyst layer with a Pd-enriched layer, dried, and baked to form a Rh catalyst layer. By the above operations, a cordierite catalytic device, having on the cordierite honeycomb substrate a Pd catalyst layer with a Pd-enriched layer and a Rh catalyst layer, in this order, was produced.

In the cordierite catalytic device with a Pd-enriched layer, the ratio of amounts of Pd on the exhaust gas flow upstream side of the catalyst layer to the downstream side was 3:2. The coating amounts of the coating liquid for forming a Pd catalyst layer and the coating liquid for forming a Pd-enriched layer were adjusted so that the total Pd content was the same as in the cordierite catalytic device in 3-3 above.

### 4. Production of heat disk with coating layer

A heat disk ("EMICAT") was coated with the coating liquid for forming a Pd catalyst/adsorption layer, and then dried and baked to form a Pd catalyst/adsorption layer. The Pd catalyst/adsorption layer was coated with the coating liquid for forming a Rh catalyst layer, and then dried and baked to form a Rh catalyst layer. By the above operations, a heat disk with a coating layer, having on the heat disk a Pd catalyst/adsorption layer and a Rh catalyst layer, in this order, was produced.

### 5. Evaluation method of exhaust gas purification catalytic system

The exhaust gas purification catalytic system was subjected to endurance running and then evaluated by operating in WLTC mode using a cold start ratio of 100%.

The exhaust gas purification catalytic system of each Example and Comparative Example was connected to an exhaust system of a gasoline engine (V-type 8-cylinder, displacement of 4,608 mL) on a bench, and subjected to endurance running in a pattern including a predetermined fuel cut at a catalyst bed temperature of 1,000 °C for 50 h.

The exhaust gas purification catalytic system after the endurance running was connected to an exhaust system of an actual vehicle (gasoline engine automobile having a displacement of 1,500 mL) on a chassis dynamometer and operated in WLTC mode. The amount of NOx emissions in the entire mode at this time was determined and evaluated as the amount of NOx emissions per km of running.

### «Example 1»

A heat disk with a coating layer was fixed using screws directly to the exhaust gas flow downstream side of a metal catalytic device (first exhaust gas purification catalytic device) with an adsorption function. A cordierite catalytic device (second exhaust gas purification catalytic device) was further arranged on the exhaust gas flow downstream side of the heat disk with a coating layer, whereby an exhaust gas purification catalytic system of Example 1 was formed, and evaluation was carried out.

### «Example 2»

Except that a cordierite catalytic device with a Pd-enriched layer was used as the second exhaust gas purification catalytic device, an exhaust gas purification catalytic system was formed in the same manner as in Example 1, and evaluation was carried out.

### <<Comparative Example 1»

In Comparative Example 1, metal catalytic devices were used for both the first exhaust gas purification catalytic device and the second exhaust gas purification catalytic device, and evaluation was carried out.

A heat disk with a coating layer was fixed using screws directly to the exhaust gas purification upstream side of one (first exhaust gas purification catalytic device) of the metal catalytic devices. The other metal catalytic device (second exhaust gas purification catalytic device) was arranged on the downstream side of the metal catalytic device to which the heat disk with a coating layer was fixed, whereby an exhaust gas purification catalytic system of Comparative Example 1 was formed, and evaluation was carried out.

### <<Comparative Example 2»

Except that the heat disk with a coating layer was fixed using screws directly to the exhaust gas flow upstream side of the first exhaust gas purification catalytic device, an exhaust gas purification catalytic system was formed in the same manner as in Example 1, and evaluation was carried out.

### <<Comparative Example 3»

Except that the fixing location of the heat disk with a coating layer was changed to the exhaust gas flow downstream side of the first exhaust gas purification catalytic device, which was a metal catalytic device, an exhaust gas purification catalytic system was formed in the same manner as in Comparative Example 1, and evaluation was carried out.

### <<Comparative Example 4»

Except that the fixing location of the heat disk with a coating layer was changed to the exhaust gas flow downstream side of the first exhaust gas purification catalytic device, which was a metal catalytic device with an adsorption function, an exhaust gas purification catalytic system was formed in the same manner as in Comparative Example 2, and evaluation was carried out.

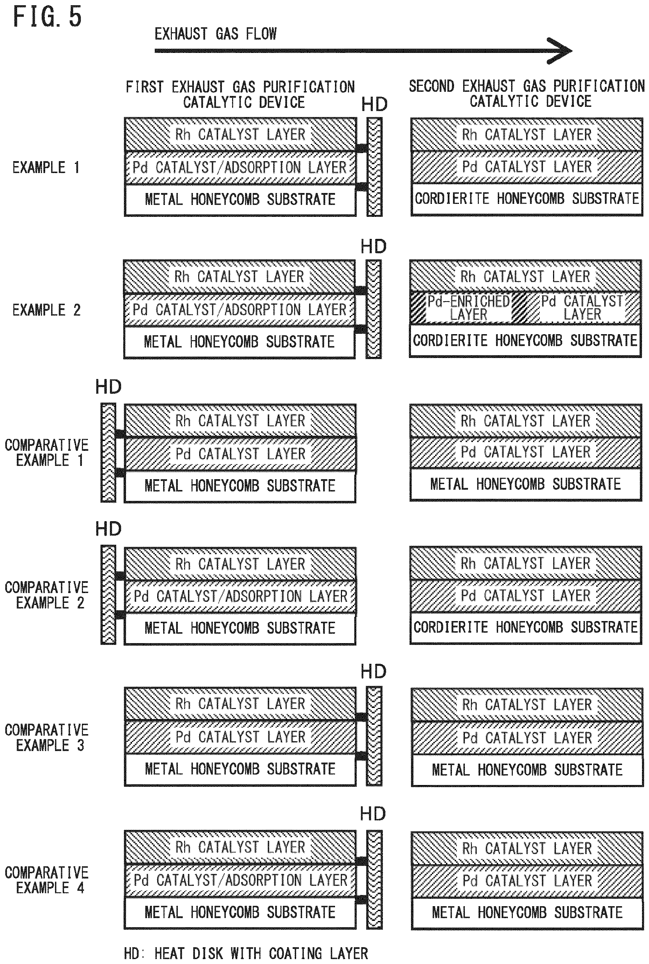

A schematic view of a configuration of each of the exhaust gas purification catalytic systems produced in Examples 1 and 2 and Comparative Examples 1 to 4 is shown in FIG. 5. The evaluation results of the Examples and Comparative Examples are shown in Table 2.

### [Table 2]

**Table 2.**

| | Configuration of exhaust gas purification catalytic system | | | | WLTC mode NOx discharge amount [g/km] |
|---|---|---|---|---|---|
| | Exhaust gas flow → | | | | |
| | Heat disk | First exhaust gas purification catalytic device | Heat disk | Second exhaust gas purification catalytic device | |
| Example 1 | | Metal catalytic device with adsorption function | ✔ | Cordierite catalytic device | 0.036 |
| Example 2 | | Metal catalytic device with adsorption function | ✔ | Cordierite catalytic device with Pd-enriched laver | 0.030 |
| Comparative Example 1 | ✔ | Metal catalytic device | | Metal catalytic device | 0.051 |
| Comparative Example 2 | ✔ | Metal catalytic device with adsorption function | | Cordierite catalytic device | 0.049 |
| Comparative Example 3 | | Metal catalytic device | ✔ | Metal catalytic device | 0.050 |
| Comparative Example 4 | | Metal catalytic device with adsorption function | ✔ | Metal catalytic device | 0.047 |

The check mark in a heat disk column indicates that a heat disk was placed at that position.

With reference to the above Table 2, it was confirmed that NOx emissions were reduced in the exhaust gas purification catalytic systems of Examples 1 and 2, wherein the heat disk was arranged on the exhaust gas flow downstream side of the metal catalytic device with an adsorption function and the cordierite catalytic device was further arranged on the downstream side thereof, compared to the systems of the Comparative Examples. It should be noted that the catalyst evaluations in the above Examples and Comparative Examples herein were carried out in WLTC mode, excluding warm start and using a cold start ratio of 100%.

The above results are considered to be the result of rapid warming of the cordierite catalytic device (second exhaust gas purification catalytic device), which has a small heat capacity, by the heat disk arranged on the exhaust gas flow downstream side of the metal catalytic device (first exhaust gas purification catalytic device) with an adsorption function.

### <<Reference Examples 1 and 2»

For the Reference Examples, the same coating layer was formed on each of a metal honeycomb substrate (diameter of 103 mm, length of 110 mm) made of stainless steel (Reference Example 1) and a cordierite honeycomb substrate (diameter of 103 mm, length of 110 mm) (Reference Example 2). Each substrate was examined on how the temperature inside the substrate rises when a high-temperature gas was introduced therein.

Each substrate was coated with a coating liquid comprising palladium nitrate, rhodium nitrate, alumina particles, cerium-zirconium composite oxide particles, and alumina binder sol, and then dried and baked to obtain a metal honeycomb substrate with a coating layer (Reference Example 1) or a cordierite honeycomb substrate with a coating layer (Reference Example 2).

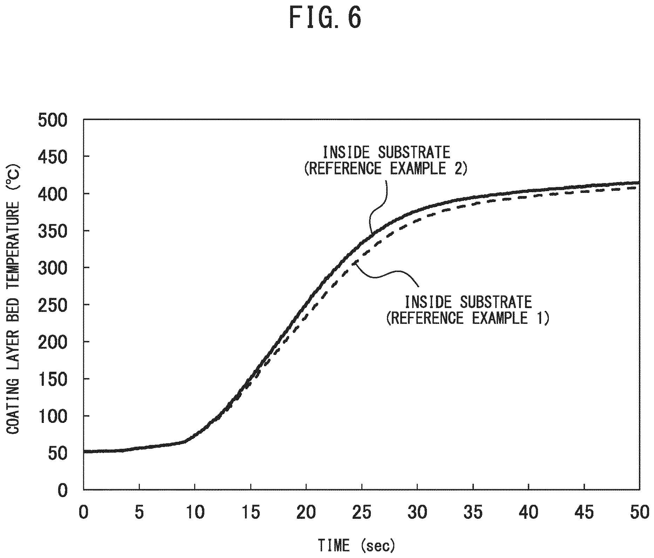

Each substrate with a coating layer was mounted on an engine bench equipped with an engine having a displacement of 2,493 mL. Thereafter, the change over time of coating layer bed temperature inside the substrate (diametric center at a position of 60 mm from the exhaust gas flow upstream end of the substrate) when the exhaust gas controlled to 500 °C under stoichiometric conditions was circulated at 230 NmL/L/min as a flow rate per L of substrate volume per min was examined. The results are shown in FIG. 6.

With reference to FIG. 6, it was found that the cordierite honeycomb substrate with a coating layer of Reference Example 2 had a faster rise in the coating layer bed temperature inside the substrate, compared to the metal honeycomb substrate with a coating layer of Reference Example 1. For example, at an elapsed time of 25 s, the bed temperature inside the metal honeycomb substrate with a coating layer of Reference Example 1 was about 310°C, whereas in the cordierite honeycomb substrate with a coating layer of Reference Example 2, the bed temperature inside the substrate reached about 330°C. It is considered that this difference in how the coating layer bed temperature rises affects NOx emissions.

### REFERENCE SIGNS LIST

- 100: first exhaust gas purification catalytic device
- 110: metal honeycomb substrate
- 120: first catalytic coating layer
- 121: lower layer
- 122: upper layer
- 130: adsorbent
- 131, 132: inorganic oxide particle
- 141, 142: catalytic noble metal particle
- 200: second exhaust gas purification catalytic device
- 210: cordierite honeycomb substrate
- 220: second catalytic coating layer
- 221: lower layer
- 222: upper layer
- 230, 231, 232: inorganic oxide particle
- 240, 241, 242: catalytic noble metal particle
- 300: heater

## Claims

1. An exhaust gas purification catalytic system, comprising,
in this order from an upstream side of an exhaust gas flow,
a first exhaust gas purification catalytic device comprising a metal honeycomb substrate and a first catalytic coating layer on the metal honeycomb substrate,
a heater, and
a second exhaust gas purification catalytic device comprising a cordierite honeycomb substrate and a second catalytic coating layer on the cordierite honeycomb substrate, wherein
the first catalytic coating layer comprises an adsorbent capable of adsorbing one or more of NOx, HC, and CO, and
the second catalytic coating layer comprises inorganic oxide particles and catalytic noble metal particles supported by the inorganic oxide particles.

2. The exhaust gas purification catalytic system according to claim 1, wherein the heater is a heat disk.

3. The exhaust gas purification catalytic system according to claim 1 or 2, wherein the heater is fixed to an exhaust gas flow downstream end of the metal honeycomb substrate.

4. The exhaust gas purification catalytic system according to claim 1 or 2, wherein the heater is formed integrally with an exhaust gas flow downstream side of the metal honeycomb substrate.

5. The exhaust gas purification catalytic system according to any one of claims 1 to 4, wherein the adsorbent comprises inorganic oxide particles.

6. The exhaust gas purification catalytic system according to claim 5, wherein the adsorbent comprises zeolite particles.

7. The exhaust gas purification catalytic system according to claim 6, wherein the zeolite particles include one or more selected from BEA zeolite, AEI zeolite, MFI zeolite, EMT zeolite, ERI zeolite, MOR zeolite, FER zeolite, FAU zeolite, CHA zeolite, LEV zeolite, MWW zeolite, CON zeolite, and EUO zeolite.

8. The exhaust gas purification catalytic system according to any one of claims 1 to 7, wherein
the first catalytic coating layer is
a catalytic coating layer having a two-layer configuration in which a lower layer and an upper layer are laminated in this order on the substrate, wherein
the lower layer comprises an adsorbent, inorganic oxide particles other than the adsorbent, and catalytic noble metal particles, and the catalytic noble metal particles are supported by at least one of the adsorbent and the inorganic oxide particles other than the adsorbent, and
the upper layer comprises inorganic oxide particles other than the adsorbent and catalytic noble metal particles, and the catalytic noble metal particles are supported by the inorganic oxide particles other than the adsorbent.

9. The exhaust gas purification catalytic system according to any one of claims 1 to 8, wherein in the second catalytic coating layer, a mass of the catalytic noble metal particles in an upstream half of an exhaust gas flow is greater than a mass of the catalytic noble metal particles in a downstream half of the exhaust gas flow.

10. The exhaust gas purification catalytic system according to claim 9, wherein in the second catalytic coating layer, a mass of the catalytic noble metal particles in the upstream half of an exhaust gas flow is more than 50% by mass and 90% by mass or less, based on a total mass of the catalytic noble metal particles in the second catalytic coating layer.

11. The exhaust gas purification catalytic system according to any one of claims 1 to 10, wherein
the second catalytic coating layer is
a catalytic coating layer having a two-layer configuration in which a lower layer and an upper layer are laminated in this order on the substrate, wherein
the lower layer comprises inorganic oxide particles and catalytic noble metal particles, and the catalytic noble metal particles are supported by the inorganic oxide particles, and
the upper layer comprises inorganic oxide particles and catalytic noble metal particles, and the catalytic noble metal particles are supported by the inorganic oxide particles.
